# EUROPÄISCHE PATENTSCHRIFT

(11) **EP 0 894 607 B1**
(45) Veröffentlichungstag und Bekanntmachung des Hinweises auf die Patenterteilung: **05.09.2001**
(21) Anmeldenummer: 98107700.1
(22) Anmeldetag: 28.04.1998
(51) Int. Cl.: B29C 47/08

(54) **Getriebe für Doppelschneckenextruder**
Drive for twin screw extruder
Transmission pour extrudeuse à deux vis

(30) Priorität: 02.08.1997 DE 29713785 U
(43) Veröffentlichungstag der Anmeldung: 03.02.1999
(73) Patentinhaber: P.I.V. Antrieb Werner Reimers GmbH & Co KG, 61352 Bad Homburg (DE)
(72) Erfinder:
(74) Vertreter: Blumenröhr, Dietrich

(56) Entgegenhaltungen:
- BE-A- 714 787
- DE-A- 3 431 547
- DE-A- 4 305 133

## Beschreibung

Die Erfindung betrifft ein Getriebe für Doppelschneckenextruder nach dem Oberbegriff in Anspruch 1. Bezüglich der Getriebegehäuse sind verschiedene Bauformen im Stand der Technik bekannt, wobei eine bevorzugte Bauform darin besteht, daß das Getriebegehäuse aus vier Gehäuseteilen besteht, welche über horizontale Trennebenen aneinander festgelegt werden. Während die mittlere Trennebene genau durch die Achsen der beiden Antriebswellen verläuft, erstrecken sich die obere und untere Trennebene durch die Achsen der Seitenwellen parallel zur mittleren Trennebene. Durch die Anordnung des Getriebezuges zwischen den beiden Abtriebswellen und den Seitenwellen in Form eines Vierecks, an dessen Eckpunkten die Achsen der Getriebewellen liegen, ist es an sich möglich, die beiden horizontal nebeneinander liegenden Abtriebswellen in ihrem Abstand stufenlos zu verändern.

Hierdurch ergibt sich jedoch das Problem, daß bei diesen viergeteilten Gehäusen aufgrund der gleichbleibenden Länge des Getriebezuges bei Veränderung des Achsabstandes zwischen den beiden Abtriebswellen auch der Abstand der beiden Seitenwellen geändert wird. Hierdurch würden die Seitenwellen aus der zugehörigen Trennfuge wandern, was die Anpassung und Verschiebung der durch die Achsen der Seitenwellen verlaufenden Trennfugen erforderlich macht. Dies führt wiederum dazu, daß jeder neue Achsabstand zwischen den Abtriebswellen eine Anpassung aller vier an die beiden Seitenwellen angrenzenden Gehäuseteile bedingt, also für jeden noch so geringen Unterschied der Achsabstände ein separates Komplettgehäuse zur Verfügung gestellt werden muß.

Aus der DE-A 34 31 547 ist des weiteren ein Getriebegehäuse für Doppelschneckenextruder bekannt, welches durch erste und zweite senkrecht zu den Abtriebswellen stehende vertikale Trennebenen in drei Abschnitte unterteilt ist, wobei der erste und der dritte Abschnitt jeweils eine dritte bzw. vierte Trennebene besitzen, die durch die Drehachse der Seitenwellen verlaufen. Bei dieser Ausführungsform hat eine Variation des Abstandes der Abtriebswellen zur Folge, dass gleichzeitig die Abstände der Seitenwellen variieren, wobei aber die Achsen der Seitenwellen in der Trennebene verbleiben können, so dass nur die Bohrungen oder Ausnehmungen für die Lagersitze und die einzelnen Wellen in ihren Abständen verändert werden müssen, im übrigen aber die Gehäuseteile weiterverwendet werden können. Das heißt, dass mit den beiden vertikalen dritten und vierten Trennebenen eine stufenlose Achsabstandsveränderung bei gleichbleibender Gehäuseteilform möglich ist. Allerdings erkauft man sich diesen Vorteil durch die erwähnte hälftige Teilung der Lagersitze, was beim Montieren bzw. Demontieren zwangsläufig zu einem Auseinanderfallen der Getriebeteile führen würde, wenn nicht die insgesamt vier restlichen Gehäuseteile für eine ausreichende Fixierung bei der Öffnung eines einzelnen Gehäuseteiles sorgen würden. Aus der DE-A 43 05 133 ist eine ähnliche Bauform eines Getriebegehäuses für Doppelschneckenextruder bekannt mit einer ersten vertikalen Trennebene, die senkrecht zur Erstreckungsrichtung der Abtriebs- und Seitenwellen angeordnet ist, und einer zweiten vertikalen Trennebene, die nicht nur durch die Achsen der Seitenwellen, sondern auch durch eine Achse einer Abtriebswelle verläuft. Um das Herausfallen der Wellen beim Öffnen des Gehäuses zu verhindern, sind hier spezielle Vorrichtungen zur Befestigung der Wellen am Gehäuse vorgesehen, Ähnliches gilt für die BE-A 714787, bei der ein Gehäuse für einen Doppelschneckenextruder ebenfalls vertikale Trennebenen aufweist, die aber nicht durch die Lagersitze der Seitenwellen verlaufen.

Im Stand der Technik sind zwar auch weitere Getriebegehäuse mit vertikaler Trennebene bekannt; diese erstreckt sich jedoch jeweils senkrecht zu den Achsen der Abtriebs- bzw. Seitenwellen, wobei bis zu vier Gehäuseteile hintereinander angeordnet werden. Diese bekannte Bauform weist außerdem den großen Nachteil auf, daß für ein Öffnen des Gehäuses erst die Wellen bzw. deren Lager aus den Lagersitzen herausgenommen werden müssen, wodurch der Zugang zum Getriebe sehr umständlich und stark erschwert ist. Entsprechend kompli-. ziert stellt sich auch die Erstmontage des Getriebes dar.

Hiervon ausgehend liegt der vorliegenden Erfindung die Aufgabe zugrunde, ein Getriebe für Doppelschneckenextruder der eingangs geschilderten Art zur Verfügung zu stellen, das eine stufenlose Achsabstandsveränderung bei gleichbleibender Form der Gehäuseteile ermöglicht und demgemäß im Hinblick auf deren Variantenvielfalt stark vereinfacht ist und das bei Montage bzw. Demontage einfach zu handhaben ist und mit einer möglichst geringen Anzahl von Gehäuseteilen auskommt.

Diese Aufgabe wird erfindungsgemäß gelöst durch die Merkmale des Anspruchs 1. Vorteilhafte Weiterbildungen der Erfindung sind Gegenstand der abhängigen Ansprüche.

Durch die vertikale Teilung des Gehäuses in zu den Wellenachsen paralleler Ebene ergibt sich der Vorteil, daß das Getriebe in einfacher Weise durch Aufklappen des Gehäuses montiert bzw. auseinandergenommen werden kann. Dies erfolgt bevorzugterweise, indem beim Aufklappen eine der Abtriebswellen außer Eingriff mit den Seitenwellen gebracht wird und hierdurch alle Wellen - obwohl noch sicher in ihren Lagersitzen gehalten - frei zugänglich sind.

Bei dieser Form der Gehäuseteilung verläuft die Trennebene nicht mehr durch die Wellenachsen und kann somit die Lagersitze auch nicht hälftig teilen. Aufgrund der optimalen Zugänglichkeit der Wellen bzw. Lagersitze bei aufgeklapptem Gehäuse ist es möglich, die Lagersitze unabhängig von deren jeweiligen Position im Gehäuse erst nach dem Anfertigen der Gehäusehälften dadurch herzustellen, daß sie in das Gehäuse gebohrt werden. Das Einbringen der einzelnen Wellen erfolgt hierauf durch Steckmontage bzw. durch Einlegen der Wellen und anschließendes Einpressen der Lager, also wiederum ohne daß bei der Form der Gehäuseteile bzw. bei der Position der Trennebene auf den Achsabstand von Abtriebs- bzw. Seitenwellen Rücksicht genommen werden muß.

Diese Art der Lagersitzherstellung wäre zwar auch bei den horizontalen Trennfugen des Standes der Technik theoretisch denkbar, jedoch scheitert die Anwendung dieses Verfahrens des Getriebezusammenbaus an der bei horizontaler Gehäuseteilung bestehenden Füge- und Montageproblematik, indem beispielsweise bei montierten Abtriebswellen die Seitenwellen nicht mehr zugänglich -. sind. Vielmehr ist man bei horizontaler Gehäuseteilung darauf angewiesen, daß alle Wellenachsen jeweils genau in den zugehörigen Trennebenen liegen, da erst hierdurch die eingegossenen Lagersitze zugänglich werden und das Einsetzen der Lager bzw. der Wellen ermöglicht wird.

Die Nachteile des Standes der Technik umgeht das erfindungsgemäße Getriebe durch die vorteilhafte Anordnung der Trennebene. Dadurch daß die Lagersitze erst nachträglich in das Gehäuse in genauer Anpassung an den jeweiligen Anwendungsfall eingebracht werden, läßt sich der Achsabstand der Abtriebswellen in einem größeren Bereich stufenlos ändern, ohne daß ein neues Gehäuse oder neue Gehäuseeinzelteile erforderlich wären. Somit liegt der wesentliche Vorteil dieser Konstruktion darin, daß über einen größeren Bereich jeder vom Kunde gewünschte Achsabstand realisiert werden kann und hierbei aber - trotz des unterschiedlichen Achsabstandes - nur diese zwei gleichen Gehäusehälften benötigt werden. Das heißt, es müssen für unterschiedliche Achsabstände keine neuen separaten Gehäuseteile zur Verfügung gestellt werden, sondern es ist lediglich das Komplettgehäuse neu zu bohren.

Außerdem kann selbst bei den unterschiedlichen Achsabständen immer der gleiche, aus denselben Verzahnungsteilen bestehende Getriebezug verwendet werden. Denn weder die Seitenwellen noch die Abtriebswellen sind in ihrer Position genau gegenüber der Trennebene festgelegt und somit können diese fast beliebig - unter Einhaltung des Viereck-Getriebezuges- im Gehäuse angeordnet werden, woran dann wiederum die Position der Lagersitze angepaßt wird und diese nachträglich in der Gehäuse gebohrt werden. Mit anderen Worten ausgedrückt, kann bei das vorliegenden Erfindung derselbe Getriebezug mit all seinen Einzelteilen deshalb für viele verschiedene Anwendungsfälle verwendet werden, da die Position der Lagersitze unabhängig von der Trennebene ist.

Dies alles führt zu einer starken Verringerung der Teilevielfalt und zu einer entsprechenden Erhöhung der Losgrößen für die Einzelteile, und hierdurch insgesamt zu erheblichen Kosteneinsparungen.

Desweiteren kann durch die vorliegende Erfindung das vom Markt geforderte-. Achsabstandsspektrum bei einem bestimmten Drehmomentbereich stufenlos abgedeckt werden, indem sich die Achsabstände unterschiedlicher Getriebegrößen überlappen. Darüberhinaus kann bei Bedarf eines Getriebes einer großen Maschine mit nur niedrigem Drehmomentbedarf eine kleinere Getriebegröße verwendet werden, deren maximales Abtriebsdrehmoment dem geforderten Drehmoment entspricht und einen vergrößerten, an die große Maschine angepaßten Achsabstand aufweist, was zu einer entsprechenden Kostenreduzierung führt.

Für ein komplettes Gehäuse werden nun nur noch zwei Gußmodelle und dies für eine Vielzahl verschiedene Antriebswellen-Achsabstände benötigt, während beim eingangs erwähnten Stand der Technik vier neue Modelle für jeden einzelnen gewünschten Achsabstand erforderlich waren. Beim erfindungsgemäßen Getriebe mit vertikaler Trennebene ist es außerdem auch möglich, den Reduktionsteil im Getriebegehäuse zu integrieren, so daß kein separates Gehäuse für den Reduktionsteil mehr vorgesehen werden muß. Somit kommt das ganze Komplettgetriebe mit nur zwei Modellen aus. Lediglich die Abtriebslaterne muß wie auch beim Stand der Technik separat gegossen bzw. hergestellt werden.

Was die genaue Lage der Trennebene betrifft, so ist außerdem erfindungsgemäß vorgesehen, dass diese durch die Lagersitze der Seitenwellen verläuft und aber von den Achsen der Seitenwellen beabstandet ist. Hierdurch ergibt sich der wesentliche Vorteil, daß keine Lagerkräfte der Abtriebswellen und auch keine Lagerkräfte der Seitenwellen auf die Trennebene wirken, da alle zugehörigen Lagerstellen in den Gehäusestegen formschlüssig gehalten sind. Darüberhinaus ergibt sich durch diesen Formschluß eine stark vereinfachte Handhabbarkeit des Getriebes, das selbst im Zustand mit geöffnetem Gehäuse ohne Hilfsvorrichtung gedreht oder geschwenkt werden kann, ohne daß Lager bzw. Wellen herausfallen. Das heißt, man muß lediglich die Abtriebslaterne abschrauben und kann dann die Trennfuge öffnen, um an das Getriebe zu gelangen.

Schließlich empfiehlt es sich, daß die Trennebene parallel zu den Abtriebswellen angeordnet ist und somit senkrecht zur von den beiden Abtriebswellen gebildeten Ebene verläuft. Außerdem kann es im Hinblick auf die Handhabbarkeit des Getriebes vorteilhaft sein, wenn die beiden Gehäusehälften miteinander schwenk- bzw. aufklappbar verbunden sind, wobei die Schwenkachse zweckmäßigerweise im Bereich der unteren horizontalen, in der Trennebene liegenden Kante der Gehäusehälften angeordnet ist.

Weilere Vorteile der vorliegenden Erfindung ergeben sich aus der nachfolgenden Beschreibung eines Ausführungsbeispiels anhand der Zeichnungen; hierbei zeigen
- Figur 1: ein Getriebegehäuse eines erfindungsgemäßen Getriebes in Vorderansicht;
- Figur 2: das Getriebe aus Figur 1 entsprechend der Schnittebene A-A aus Figur 1; und
- Figur 3: das Getriebe entlang der Schnittebene B-B aus Figur 1.

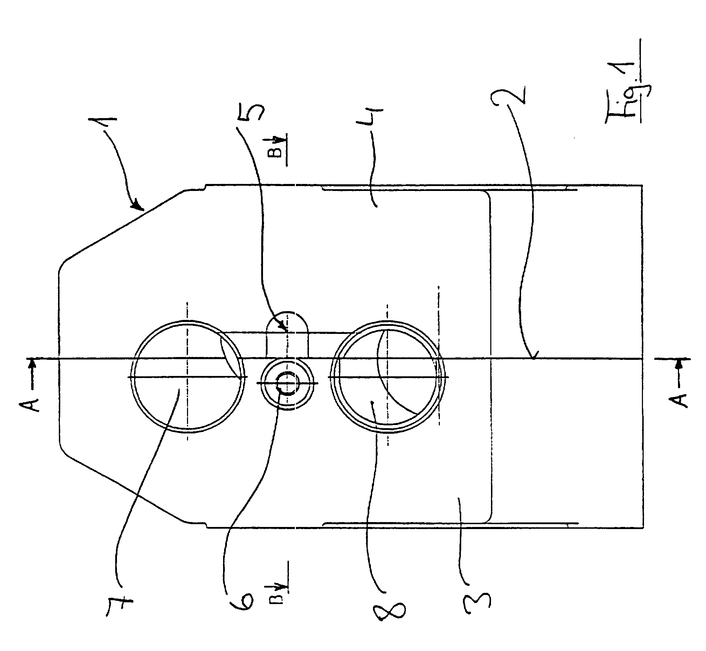

In Figur 1 ist ein Getriebegehäuse 1 eines Getriebes für Zweiwellenextruder in Vorderansicht dargestellt, das entlang einer vertikalen Trennebene 2 in zwei spiegelbildliche Gehäusehälften 3, 4 aufgeteilt ist. Ungefähr in der Mitte des Getriebegehäuses sind zwei Abtriebswellen 5, 6 nebeneinander angeordnet, die sich horizontal von der Gehäusevorderseite nach hinten - in Figur 1 in die Zeichenebene hinein - erstrecken. Aus darstellungstechnischen Gründen ist die Abtriebswelle 6 nur durch die Symmetrielinien angedeutet und nicht zeichnerisch dargestellt.

Die Trennebene 2 ist so angeordnet, daß sie sich genau zwischen den beiden Abtriebswellen erstreckt. Die in Figur 1 rechts dargestellte Abtriebswelle 5 treibt über zwei Seitenwellen 7, 8 die links daneben angeordnete Abtriebswelle 6 an, wobei die beiden Seitenwellen 7, 8 unter- bzw. oberhalb der beiden Abtriebswellen angeordnet sind. Die Trennebene 2 durchquert die zugehörigen Lagersitze der Seitenwellen 7, 8, wobei jedoch die Achsen der Seitenwellen von der Trennebene beabstandet sind und somit die Durchquerung der Lagersitze in Figur 1 nach rechts versetzt erfolgt. Durch dieses asymmetrische Teilen der Lagersitze kann das Gehäuse entlang der Trennebene zerlegt werden, ohne daß die beiden Seitenwellen 7, 8 bzw. deren Lager aus den Lagersitzen herausfallen können, da sie darin formschlüssig gehalten werden.

Gleiches gilt für die beiden Abtriebswellen 5, 6, die ebenfalls vom Gehäuse umgeben sind und in diesem formschlüssig verankert sind.

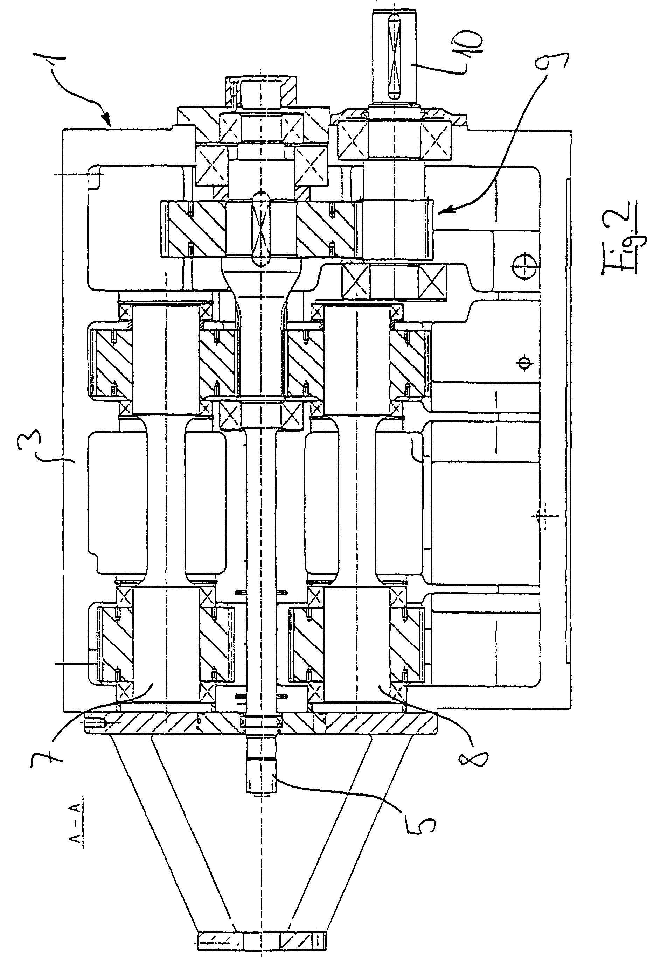

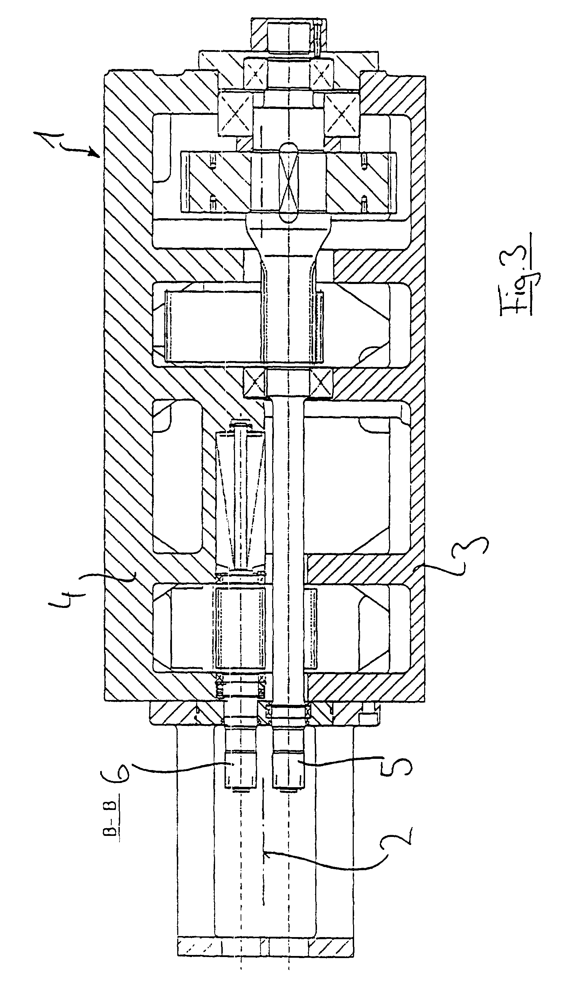

Die Eingriffsverhältnisse der Abtriebs- und Seitenwellen und deren Anordnung innerhalb des Gehäuses lassen sich insbesondere aus den Figuren 2 und 3 erkennen. Hieraus ist ersichtlich, daß die Abtriebswelle 5 das Gehäuse über dessen gesamte Tiefe durchquert und an dem rückwärtigen Ende mit einem Reduktionsgetriebe 9 kämmt, das über eine Antriebswelle 10 angetrieben wird. Die Abtriebswelle 6 erstreckt sich ungefähr nur bis zur halben Tiefe des Gehäuses und kämmt dort mit den beiden Seitenwellen 7, 8, die wiederum von der Abtriebswelle 5 angetrieben werden. Somit wird das Antriebsdrehmoment von der Antriebswelle 10 über das Reduktionsgetriebe 9 auf die durchgehende Abtriebswelle 5 übertragen, die mit dem halben Drehmoment direkt in den Extruder treibt, während das restliche Drehmoment über die beiden Seitenwellen (Torsionswellen) 7, auf die kurze Abtriebswelle 6 und von dort in den Extruder übertragen wird.

Der Schnitt entlang der Ebene A-A aus Figur 2 entspricht genau dem Verlauf der Trennebene 2, während der Schnitt entlang der Ebene B-B senkrecht hierzu angeordnet ist und wiederum in seiner Mitte die Trennebene 2 erkennen läßt. In den Figuren 2 und 3 ist auch zu sehen, daß ein veränderter Abtriebswellenabstand keinen Einfluß auf das Aussehen der Gehäusehälften hat, insbesondere da erst die beiden Gehäusehälften gegossen werden und die Lagersitze der Abtriebs- bzw. Seitenwellen erst nachträglich gebohrt werden. Hierbei erfolgt das Einsetzen der Wellen durch Steckmontage.

Zusammenfassend ergibt sich durch die vorliegende Erfindung der Vorteil, daß unter Verwendung gleicher Radsätze ein aus zwei Hälften bestehendes Gehäuse für mehrere unterschiedliche Abtriebsachsabstände verwendet werden kann, ohne daß hierfür eine spezielle Anpassung der Gehäuseform erforderlich wäre; darüberhinaus kommt das Getriebegehäuse aufgrund der vertikalen Trennebene mit nur zwei Gehäusehälften aus, wodurch die Teilevielfalt entsprechend weiter reduziert wird. Schließlich ist auch das Handhaben des Getriebes bei geöffnetem Gehäuse dadurch vereinfacht, daß die Wellen bzw. Lager jeweils formschlüssig in den Lagersitzen gehalten werden.

## Patentansprüche

1. Getriebe für Doppelschneckenextruder mit einer von einer Antriebswelle insbesondere über ein Reduktionsgetriebe angetriebenen ersten Abtriebswelle und einer von der ersten Abtriebswelle über zwei beidseitig angeordnete Seitenwellen angetriebenen zweiten Abtriebswelle, wobei die Wellen achsparallel und in einem gemeinsamen Getriebegehäuse angeordnet sind und wobei das Gehäuse (1) entlang zumindest einer Trennebene (2) geteilt ist und zumindest die Trennebene vertikal zwischen den Achsen der beiden Abtriebswellen (5, 6) und durch die Lagersitze der Seitenwellen (7, 8) verläuft,
**dadurch gekennzeichnet**,
dass das Gehäuse nur eine Trennebene (2) aufweist, die das Gehäuse vertikal in nur zwei Gehäusehälften (3, 4) aufteilt, und dass die Trennebene (2) von den Achsen der Seitenwellen (7, 8) beabstandet ist.

2. Getriebe nach Anspruch 1,
**dadurch gekennzeichnet**,
daß die Trennebene (2) parallel zu den Abtriebswellen (5, 6) angeordnet ist.

3. Getriebe nach Anspruch 2,
**dadurch gekennzeichnet**,
daß die Trennebene (2) senkrecht zur von den beiden Abtriebswellen (5, 6) gebildeten Ebene angeordnet ist.

## Claims

1. Gear for a twin-screw extruder having a first output shaft driven by a drive shaft, especially by way of a reduction gear, and having a second output shaft driven by the first output shaft by way of two side shafts arranged one on each side, the shafts being axially parallel and arranged in a common gear housing and the housing (1) being divided along at least one dividing plane (2) and at least the dividing plane extending vertically between the axes of the two output shafts (5, 6) and through the bearing seat of the side shafts (7, 8),
**characterised in that**
the housing has only one dividing plane (2) which divides the housing vertically into only two housing halves (3, 4), and the dividing plane (2) is spaced apart from the axes of the side shafts (7, 8).

2. Gear according to claim 1,
**characterised in that**
the dividing plane (2) is arranged parallel to the output shafts (5, 6).

3. Gear according to claim 2,
**characterised in that**
the dividing plane (2) is arranged perpendicularly to the plane formed by the two output shafts (5, 6).

## Revendications

1. Transmission pour extrudeuse à deux vis munie d'un premier arbre de sortie entraîné par un arbre menant, notamment par l'intermédiaire d'un réducteur démultiplicateur, et d'un second arbre de sortie entraîné par le premier arbre de sortie par l'intermédiaire de deux arbres latéraux placés des deux côtés, les arbres étant placés de manière parallèle à l'axe et disposés dans un carter d'engrenages commun, le carter (1) étant divisé au moins le long d'un plan de joint (2), et au moins le plan de joint passant verticalement entre les axes des deux arbres de sortie (5,6) et par les sièges de palier des arbres latéraux (7, 8), **caractérisée en ce que** le carter ne présente qu'un plan de joint (2) qui divise le carter verticalement seulement en deux moitiés de carters (3, 4) et en ce que le plan de joint (2) est à distance des axes des arbres latéraux (7, 8).

2. Transmission selon la revendication 1, **caractérisée en ce que** le plan de joint (2) est placé parallèlement aux arbres de sortie (5, 6).

3. Transmission selon la revendication 2, **caractérisée en ce que** le plan de joint (2) est placé perpendiculairement au plan formé par les deux arbres de sortie (5, 6).
